# FASCICULE DE BREVET EUROPEEN

(11) **EP 2 677 867 B1**
(45) Date de publication et mention de la délivrance du brevet: **30.11.2016**
(21) Numéro de dépôt: 12709947.1
(22) Date de dépôt: 21.02.2012
(51) Int. Cl.: A01N 37/36, A01N 65/28, A01N 65/00, A01N 65/22

(54) **PRODUITS BIOCIDES**
BIOZIDE PRODUKTE
BIOCIDAL PRODUCTS

(30) Priorité: 25.02.2011 FR 1151546
(43) Date de publication de la demande: 01.01.2014
(73) Titulaire: Salveco, 88100 Saint Die Des Vosges (FR)
(72) Inventeur: AUBERGER, Stephan, F-88100 Neuvillers Sur Fave (FR)
(74) Mandataire: Rhein, Alain
(86) Numéro de dépôt international: PCT/FR2012/050367
(87) Numéro de publication internationale: WO 2012/114039

(56) Documents cités:
- EP-A1- 1 146 112
- EP-A1- 1 167 510
- WO-A1-2007/018907
- US-A1- 2002 055 446
- US-A1- 2005 032 668
- US-A1- 2010 101 605

## Description

La présente invention porte sur une nouvelle génération de produits biocides d'origine végétale qui ne présentent pas de risques chroniques et très peu d'impacts aigues pour la santé et l'environnement. En effet, les substances actives et les adjuvants qui composent les produits biocides selon l'invention sont d'origine végétale et renouvelable, et sont par ailleurs totalement, naturellement et rapidement biodégradables. Les différentes applications de ces nouveaux produits biocides sont également revendiquées.

Les produits biocides sont communément utilisés dans une large variété de produits incluant des désinfectants ménagers et/ou industriels, des insecticides, des produits de traitement du bois, des répulsifs, etc... Les produits biocides sont destinés à détruire, repousser ou rendre inefficaces les organismes jugés nuisibles comme par exemple les bactéries, les virus et les champignons, à en prévenir l'action ou à les combattre de toute autre manière par une action chimique ou biologique. Ce sont donc des produits actifs sur le plan chimique ou biologique, et par conséquent susceptibles d'avoir des effets nuisibles sur l'homme, l'animal et/ou l'environnement.

Un biocide se caractérise en général par son champ d'application: bactéricide, fongicide, virucide, insecticide, lutte contre les vertébrés. Les bactéricides ont une action contre les bactéries. Les fongicides ont une action contre certains champignons et certaines levures. Les antiviraux ont une action contre certains virus. Les insecticides ont une action contre les insectes. La dernière catégorie a une action contre certains vertébrés (ex : rongeurs nuisibles).

Les actifs biocides peuvent donc présenter un risque majeur pour la santé humaine (d'un point de vue étymologique « bios » signifie « la vie » et « -cide » signifie « qui tue »), et animale mais également pour l'environnement par diffusion ou rejet. En effet, les actifs biocides peuvent agir longtemps, se diffuser, être partiellement dégradés ou ne pas être dégradés du tout suivant leur nature ; ils sont alors considérés comme (bio)accumulables. Il y a donc un réel intérêt à développer des produits biocides efficaces contre les organismes nuisibles mais susceptibles d'être intégralement dégradés de façon naturelle et de diminuer les risques directs (liés à la toxicité dite aigue) ou indirects (liés à la toxicité chronique) pour l'homme et l'animal.

Une prise de conscience internationale à ce sujet a abouti à l'adoption de Règlement et Directives européennes (REACH . 1907/2006 et Biocides : 98/8/CE) ayant pour objectif de limiter la commercialisation de substances chimiques dangereuses et d'en réguler strictement l'utilisation.

Le marché des produits biocides pour l'Europe représente un volume de 300 000 à 750 000 tonnes par an (Étude de l'impact de la directive Biocides 98/8/EC - 2007). Il y a donc un intérêt considérable à utiliser des produits biocides qui ne présentent pas ou significativement moins de dangers pour l'homme, l'animal et/ou l'environnement, tout en étant efficaces à faible concentration, qui soient d'origine végétale et renouvelable et intégralement biodégradables.

Les produits biocides peuvent être utilisés pour nettoyer et désinfecter tous types de surfaces. Les substances actives qui les composent sont en général des principes actifs d'origine chimique, parfois des principes actifs d'origine naturelle, soit encore un mélange des deux.

Afin de développer des produits biocides qui ne soient pas toxiques et/ou préjudiciables pour l'homme et l'environnement, et qui soient également biodégradables et biocompatibles pour l'homme, des biocides d'origine naturelle ont été développés. En effet, les produits biocides d'origine végétale semblent les plus appropriés pour répondre à ces objectif combinés. La majorité des solutions biocides contiennent une base lavante combinée à une base désinfectante. Cependant, ces produits ne présentent pas forcément la même efficacité biocide ni la même facilité d'utilisation que les solutions biocides contenant des actifs chimico-synthétiques.

La demande de brevet US 2010/0101605 décrit des lingettes multifonctionnelles dites « vertes », car le support est considéré biodégradable, imprégnées d'une solution biocide. La solution décrite contient une composition lavante combinée à une composition désinfectante/hygiénique. La composition lavante contient des surfactants non-ioniques tels des surfactants issus de sucres, de polyols, d'alkyl éthers et d'alkyl carbonates. Elle contient également des co-surfactants de nature ionique : anionique, cationique, zwitterionique ou amphotérique. La composition désinfectante contient au moins un agent actif sélectionné parmi les huiles essentielles, l'argent colloïdal, les acides organiques, ou des mélanges de ces composants. Elle peut également contenir des métaux et des sels de métaux. La composition peut être complétée par des liants, des agents d'ajustement du pH et d'autres adjuvants en fonction de l'application envisagée. Les lingettes biocides objet de ce document ont pour désavantage de ne pas être intégralement biodégradables et de ne pas être intégralement constituées d'éléments d'origine naturelle renouvelable. C'est un « jus » d'imprégnation prêt à l'emploi donc dilué qui n'est pas basé sur une synergie permettant d'avoir un concentré actif.

Il y a donc une nécessité de développer une alternative durable et sécuritaire à l'utilisation de produits chimico-synthétiques, qui permette d'obtenir une efficacité biocide et une facilité d'usage de produit à dilué et prêt à l'emploi au moins équivalentes aux produits chimico-synthétiques du marché professionnel. Il convient donc d'avoir un produit superconcentré qui puisse être diluable dans l'eau avant utilisation.

La présente invention porte sur une nouvelle génération de formulations biocides pour le nettoyage et la désinfection de toutes les surfaces. Leur impact sur l'environnement est très limité, voir nul et dans tous les cas il n'est pas considéré comme préoccupant. En effet, ces formulations biocides sont issues de ressources végétales agricoles renouvelables et elles sont également intégralement biodégradables sur l'ensemble de la formulation. La substance active des formulations biocides selon l'invention est au moins un acide organique d'origine végétale. Cet acide organique peut être issu directement d'une ressource agricole, ou d'une ressource agricole transformée.

La présente invention décrit une formulation biocide concentrée d'origine végétale caractérisée en ce qu'elle comporte des composés d'origine végétale et renouvelable, lesdits composés étant intégralement biodégradables, ladite formulation contenant :
- entre 0,01% et 20% d'agent chélatant sélectionné parmi l'acide citrique issu du jus de citron, l'acide sorbique issu du sorbier, l'acide oxalique issu des racines ou des rhizomes de plantes, les extraits de chicorée;
- entre 0,03% et 25% de tensioactifs non-ioniques de type glycosides, esters de polyglycérols ou esters de sorbitan;
- entre 0,03% et 25% de tensioactifs anioniques sélectionnés parmi les sels carboxyliques d'alkyl polyéthoxylés/propoxylés et/ou de polyols de type polyglycosides et/ou polyglycérols, de métaux alcalins ou alcalino-terreux et sont associés à des structures chimiques acides pour former des tensioactifs du type alkyl carboxylate et/ou alkyl sulfates, lesdits tensioactifs anioniques ayant une chaîne carbonée comprenant entre 6 et 20 atomes de carbone;
- entre 0,1% et 75% d'au moins un acide organique sélectionné parmi l'acide citrique, l'acide lactique et l'acide succinique;
- entre 0,001% et 8% de parfum naturel sélectionné parmi les huiles essentielles, les essences végétales et les extraits végétaux, comme la menthe A, la menthe N ou l'eucalyptus G. La présente formulation est intégralement biodégradable et intégralement issue de ressources végétales agricoles renouvelables. En outre, les ingrédients utilisés dans la composition ne présentent pas de risques particuliers pour l'environnement et la santé.

Les pourcentages exprimés dans le cadre de la présente invention représentent le pourcentage massique des composés par rapport à la masse totale de la formulation biocide.

Les tensioactifs non-ioniques de type glycosides ou polyglycérols, au sens de l'invention, sont des tensioactifs non-ioniques de type polyols avec des motifs glycosides, c'est-à-dire des alkyl polyglycosides, ou des motifs polyglycerols.

De préférence, les tensioactif de type polyglycérols utilisés dans la formulation biocide concentrée sont au moins un des composés sélectionné parmi des monoesters ou des diesters d'acide gras condensés sur du glycérol ou des polyglycérols. On peut citer par exemple le polyglycéryl-2-laurate, le polyglycéryl-5-laurate, le polyglycéryl-4-caprate, le polyglyceryl-3-palmitate et le monoglycérol laurate.

De préférence, les tensioactif de type ester de sorbitan utilisés sont sélectionnés parmi les ester suivant, ethoxylés ou non : sesquioctanoate de sorbitan, laurate de sorbitan.

En plus d'un impact très réduit par rapport à l'état de l'art sur l'environnement, les formulations biocides selon l'invention présentent un effet synergique entre le ou les acide(s) organique(s) et le tensioactif non-ionique et/ou le tensioactif anionique et/ou l'agent chélatant.

Parmi les acides organiques utilisables dans la composition des formulations biocides selon la présente invention, on citera notamment l'acide acétique, l'acide formique, l'acide citrique, l'acide sorbique, l'acide lactique, l'acide succinique, l'acide tartrique, l'acide malique et l'acide pyruvique. Le choix de l'acide organique est fait en fonction du domaine d'application des formulations biocides et des organismes cibles à éliminer ou dont on souhaite ralentir ou bloquer le développement. Dans un mode de réalisation particulier, le ou les acides organiques sont l'acide lactique et l'acide citrique. Dans un mode de réalisation préféré, seul l'acide lactique est utilisé. En effet, l'acide (L+) lactique est l'un des éléments indispensables du métabolisme humain, mais également du métabolisme des animaux et des micro-organismes. C'est la forme (L+) qui semble être la forme naturelle de l'acide lactique. L'acide lactique présente de façon intrinsèque des propriétés d'interférence sur les micro-organismes car il agit directement sur le pH intracellulaire ainsi que sur leur cycle énergétique. Il a donc une action antimicrobienne en inhibant leur croissance (pour *Escherichia coli* entre autres). Ce qui est encore plus intéressant et a récemment été mis en évidence est le fait que l'acide lactique présente un important effet stabilisateur associé à un effet tampon lorsqu'il est combiné à certains surfactants et/ou d'autres agents antimicrobiens tels l'éthanol ou le peroxyde d'hydrogène (H₂O₂). Il a également été observé que certains surfactants comme le sodium lauryl sulfate (SLS) et le sodium alkyl sulfonate (SAS) pourraient faciliter grandement la pénétration de l'acide (L+) lactique dans les micro-organismes cibles. Par ailleurs, en présence d'éthanol, la quantité d'acide (L+) lactique nécessaire pour éliminer des colonies *d'Escherichia coli* est diminuée (US 4,647,458). Ceci est également vérifié en combinant de l'acide (L+) lactique et du peroxyde d'hydrogène (EP 0 423 922). Cet acide organique qui de plus, est parfaitement biodégradable et peut être obtenu à partir de ressources naturelles renouvelables semble donc parfaitement approprié pour intégrer la composition de produits biocides. Le ou les acides organiques sont présents dans la formulation selon l'invention à raison de 0,1% à 75%. Par conséquent, dans un mode de réalisation particulier selon la présente invention, la formulation biocide concentrée d'origine végétale contient :
- entre 0,01% et 20% d'agent chélatant ;
- entre 0,03% et 25% de tensioactifs non-ioniques de type polyols de préférence avec motifs glycosides ou polyglycérols ou des esters de sorbitan ;
- entre 0,03% et 25% de tensioactifs anioniques de préférence de type carboxylates ou polycarboxylates ;
- entre 0,1% et 75% d'acide lactique ;
- entre 0,001% et 8% de parfum naturel ;
et est intégralement biodégradable et intégralement issue de ressources végétales agricoles renouvelables.

Les tensioactifs non-ioniques entrant dans la composition du produit biocide selon l'invention sont préférentiellement sélectionnés parmi les alkyl polyols du type polyglycosides, les esters de polyglycerols et les ester de sorbitan. Ces composés sont issus de ressources agricoles renouvelables telles l'alcool d'huile de noix de coco ou le polyglucose de maïs. Les chaînes carbonées utilisées pour la synthèse de ces tensioactifs peuvent être ramifiées ou non, mais de préférence linéaire, avec une longueur de chaîne comprise entre 4 et 20, et de préférence 6 et 18 atomes de carbone, suivant les applications recherchées pour le produit biocide. Par ailleurs, ces composés ne présentent aucune irritation de la peau chez l'homme.

Les tensioactifs anioniques entrant dans la composition du produit biocide selon l'invention sont préférentiellement sélectionnés parmi les sels carboxyliques d'alkyl polyéthoxylés/propoxylés et/ou polyols du type polyglycosides et/ou polyglycérols. Les sels sont issues de métaux alcalins (K, Na,...) ou alcalino-terreux (Ca, Mg,...) et sont associés à des structures chimiques acides pour former des tensioactifs du type alkyl carboxylates ou/et alkyl sulfates. Ils sont issus de ressources agricoles renouvelables et sont biodégradables. Les chaînes carbonées utilisées pour la synthèse de ces tensioactifs peuvent être ramifiées ou non, avec une longueur de chaîne comprise entre 6 et 20 atomes de carbone suivant les applications recherchées pour le produit biocide. Parmi les tensioactifs anioniques communément utilisés, les formulations biocides contiennent préférentiellement des sels d'acides gras éthoxylés ou non.

De manière alternative ou en complément, les tensioactifs anioniques utilisés sont de préférence choisis parmi au moins un sel de sodium ou d'ammonium d'alkyl sulfates, d'alkyl glucose carboxylates, d'alkyl éther carboxylate, d'alkyl phosphate, d'alkyl éther phosphate, d'alkyl sulfosuccinamate, d'alkyl sulfo succinate et d'alkyl sulfo acétate. Les formes acides conjuguées de tels tensioactifs anioniques peuvent également être utilisées. Avantageusement les tensionactifs anioniques rentrant dans la formulation selon l'invention sont choisi parmi au moins l'un des composé suivants : un ou plusieurs sel de sodium de glycosides de carboxyméthyl éther en C10-C16 ; un sel de sodium de carboxyméthyl-dodecyloxy ; un sel de sodium de carboxyméthyl-octyloxy et le laurylsulfate de sodium (ou dodécylsulfate de sodium -SDS).

Dans un mode de réalisation particulier, la formulation biocide selon l'invention contient des tensioactifs non-ioniques et anioniques dont la chaîne carbonée est comprise entre 6 et 20 atomes de carbone. Dans un mode de réalisation particulier cette chaîne carbonée est comprise entre 8 et 16 atomes de carbone.

Dans un certain mode de réalisation, le produit biocide selon l'invention contient des tensioactifs non-ioniques sélectionnés parmi les alkyl polyéthoxylés et/ou alkyl polyglycosides et les esters de polyglycerols. Enfin, dans un mode de réalisation préféré, le produit biocide selon l'invention contient des tensioactifs non-ioniques sélectionnés parmi les alkyl polyéthoxylés et/ou polyglycosides et les esters de polyglycerols dont la chaîne carbonée comprend 6 à 20 atomes de carbone. Des exemples d'alkyl polyglycosides utilisables dans la formulation selon l'invention sont le D-glucopyranose alkyl en C8-C10 glycosides et le D-glucopyranose alkyl en C10-C16 glycosides.

Dans un autre mode de réalisation, le produit biocide selon l'invention contient des tensioactifs anioniques sélectionnés parmi les sels d'acides de type alkyl polyéthoxylés/propoxylés et/ou polyols du type polyglycosides et/ou polyglycérols. Le nombre de motifs hydrophiles pour avoir une HLB (Hydrophilic-Lipophilic Balance, balance hydrophile/hydrophobe) intéressante est entre 1 et 10. Dans un autre mode de réalisation préféré, le produit biocide selon l'invention contient des tensioactifs anioniques sélectionnés parmi les alkyl carboxylates et les alkyl sulfates dont la chaîne carbonée comprend 6 à 20 atomes de carbone.De préférence, les polyglycosides utilisés comme tensioactifs non ioniques dans la formulation biocide concentrée selon l'invention sont sélectionnés parmi les alkyl polyglycosides en C4 à C18, et il s'agit avantageusement de l'un au moins des composés choisis parmi : un lauryl polyglycoside tel que le lauryl glucoside (dodecyl glucoside, également dénommé n-Dodecyl β-D-glucopyranoside) ; un myristyl polyglycoside tel que le myristyl glucoside (tétradecyl β-D-glucopyranoside) et un caprylyl/capryl polyglycoside tel que l'octyl glucoside (*n-*octyl β-D-glucopyranoside).

Les agents chélatants entrant dans la composition du produit biocide selon l'invention sont des agents conventionnels dans le domaine du nettoyage et de la désinfection des surfaces à usage domestique et professionnel. Ils sont sélectionnés parmi les chélatants couramment utilisés dans les produits biocides, tels l'acide citrique issu du jus de citron ou l'acide sorbique issu du sorbier ou l'acide oxalique issu des racines ou des rhizomes de nombreuses plantes (oseille, betterave, etc.), les monomères ou polymères séquestrants comme les extraits de chicorée. Les propriétés olfactives des produits biocides selon l'invention sont conférées par la présence d'un parfum naturel issu d'une ressource naturelle renouvelable et biodégradable. Ces parfums naturels sont des huiles essentielles, des essences végétales ou des extraits végétaux. On citera notamment à titre d'exemple la menthe A, la menthe N ou l'eucalyptus G.

Dans un mode de réalisation préféré, la formulation biocide concentrée d'origine végétale contient :
- entre 0,01% et 20% d'agent chélatant ;
- entre 0,03% et 25% de tensioactifs non-ioniques de type alkyl polyglycosides, esters de polyglycerols ou esters de sorbitan ;
- entre 0,03% et 25% de tensioactifs anioniques de type alkyl carboxylates;
- entre 0,1% et 75% d'acide lactique ;
- entre 0,001% et 8% de parfum naturel ;
et est intégralement biodégradable et intégralement issue de ressources végétales agricoles renouvelables. L'activité biocide de l'acide lactique est alors significativement augmentée par la présence des tensioactifs et des agents chélatants.

Dans un mode de réalisation préféré, la formulation biocide concentrée d'origine végétale contient :
- entre 0,01% et 20% d'agent chélatant ;
- entre 0,03% et 25% de tensioactifs non-ioniques de type alkyl polyglycosides, esters de polyglycerols ou ester de sorbitan ;
- entre 0,03% et 25% de tensioactifs anioniques de type alkyl carboxylates ou alkyl sulfates avec ou sans résidus propoxylés ou éthoxylés
- entre 0,1% et 75% d'acide L-lactique ;
- entre 0,001% et 8% de parfum naturel.

Selon encore un autre mode de réalisation, la formulation biocide concentrée d'origine végétale contient :
- 0,4% d'huiles essentielles ;
- 12% de tensioactifs non-ioniques de type glycosides, esters de polyglycérols ou esters de sorbitan ;
- 8% de tensioactifs anioniques de type sels d'acides gras avec une chaîne contenant entre 12 et 18 atomes de carbone ;
- 20% à 40% d'acide citrique;
- 0% à 10% d'acide lactique ;
et qu'elle est intégralement biodégradable et intégralement issue de ressources végétales agricoles renouvelables.

Une formulation contenant le produit biocide selon l'invention peut être diluée de 1 à 500 fois dans l'eau en fonction de l'utilisation envisagée.

Les formulations selon l'invention sont conformes à la réglementation européenne en termes d'efficacité. Elles répondent aux normes EN1040, EN1276, EN1650 et EN14476+A1 en conditions de saleté ou de propreté. Ces formulations sont sans danger particulier pour l'homme et sans préjudice pour l'environnement.

Les formulations biocides selon l'invention sont susceptibles d'être utilisées à des taux de dilution et dans des temps d'action comparables à ceux requis par le marché professionnel, sont conformes aux exigences d'efficacité biocide requises, sans danger particulier à l'application, biodégradables et sans écotoxicité après élimination.

Les applications envisagées pour les formulations biocides selon l'invention sont basées sur une action désinfectante mais aussi détergente, dégraissante, émolliente, olfactive, etc... On citera à titre d'exemples mais sans que cette liste ne soit exhaustive une application des formulations selon l'invention à des produits anti-mousse pour nettoyer les ouvrages de maçonnerie ; des produits pour nettoyer les pontons et les coques de bateaux des mousses et algues qui les colonisent ; des solutions détergentes désinfectantes pour tous types de surface ; des solutions pour l'hygiène des mains par lavage ou par friction ; des solutions de désinfection des denrées alimentaires ; des solutions pour la désinfection de locaux, bâtiments et matériels de transport et d'élevage (POA, POV) ; des solutions de désinfection des surfaces pour l'industrie agroalimentaire, cosmétique ou pharmaceutique ; des solutions de désinfection pour locaux et/ou transport des ordures ménagères.

Dans une mode de réalisation particulier, les formulations biocides selon l'invention sont utilisées pour l'hygiène des mains, par lavage ou par friction, sous forme liquide ou semi-liquide.

Dans un mode de réalisation préféré, les formulations biocides selon l'invention sont fournies sous forme liquide concentrée. Elles peuvent être très diluées dans l'eau (par exemple par 100) sans autre ajout et conservées tout aussi bien leurs activités en fonction de l'application envisagée.

La présente invention porte également sur un substrat associé à une formulation biocide selon l'invention, permettant l'application de ladite formulation sur une surface à nettoyer et à désinfecter. Ce substrat peut consister en un tissu, une lingette ou une serviette. Sur son substrat, la formulation selon l'invention peut être pure et n'être activée qu'une fois en présence d'eau, ou encore être déjà diluée et prête à l'emploi.

Selon un autre aspect la présente invention concerne une formutation biocide prête à l'emploi obtenue par dilution à l'eau à partir de la formulation biocide présentée précédemment dans le cadre de la présente invention et remarquable en ce qu'elle comporte des composés d'origine végétale et renouvelable, lesdits composés étant intégralement biodégradables, ladite formulation contenant :
- entre 0,01% et 0,2% d'agent chélatant sélectionné armi l'acide citrique issu du jus de citron, l'acide sorbique issu du sorbier, l'acide oxalique issu des racines ou des rhizomes de plantes, les extraits de chicorée;
- entre 0,03% et 0,1% de tensioactifs non-ioniques de type glycosides, esters de polyglycérol, ou esters de sorbitan ;
- entre 0,03% et 0,1% de tensioactifs anioniques sélectionnés parmi les sels carboxyliques d'alkyl polyéthoxylés/propoxylés et/ou de polyols de type polyglycosides et/ou polyglycérols, de métaux alcalins ou alcalino-terreux et sont associés à des structures chimiques acides pour former des tensioactifs du type alkyl carboxylate et/ou alkyl sulfates, lesdits tensioactifs anioniques ayant une chaîne carbonée comprenant entre 6 et 20 atomes de carbone ;
- entre 0,1% et 0,5% d'au moins un acide organique sélectionné parmi l'acide citrique, l'acide lactique et l'acide succinique.

Cette formulation est intégralement biodégradable et intégralement issue de ressources naturelles agricoles renouvelables.

Une telle formulation prête à l'emploi démontre l'efficacité de la synergie d'action des ingrédients du mélange à de très faibles concentrations. Il est particulièrement avantageux d'obtenir l'effet biocide recherché à partir d'une telle formulation très diluée, ce qui permet d'améliorer la sélectivité en éradiquant spécifiquement les espèces indésirables.

### Exemple

Une formulation concentrée à activité biocide selon l'invention contenant :
- 0,4% d'huiles essentielles (Menthe N, Eucalyptus G et/ou menthe A);
- 12% de tensioactifs non-ioniques de type glycosides (D-glucopyranose alkyl en C8-C10 glycosides et/ou le D-glucopyranose alkyl en C10-C16 glycosides);
- 8% de tensioactifs anioniques de type sels d'acides gras avec une chaîne contenant 12 à 18 atomes de carbone (sel(s) de sodium de glycosides de carboxyméthyl éther en C10-C16, sel de sodium de carboxyméthyl-dodecyloxy, un sel de sodium de carboxyméthyl-octyloxy et/ou le laurylsulfate de sodium) ;
- 20% d'acide citrique à 50% ;
- 10% d'acide (L+) lactique.

Le classement le plus sévère pour cette substance biocide concentrée est Xi R38/41 selon la réglementation en vigueur pour les biocides. Ceci ne présente aucun danger particulier pour l'homme ou pour l'environnement comparativement aux substances biocides sur le Marché.

Cette formulation est à diluer en fonction des surfaces à nettoyer, à assainir et à désinfecter. La forme diluée active pour la fonction de désinfecter, ne présente aucun danger connu et/ou réglementé.

### Tests d'efficacité de la formulation biocide

### 1. Levures

Cet essai quantitatif de suspension pour l'évaluation de l'activité levuricide de base de la formulation selon l'invention est réalisé par un Laboratoire de Microbiologie. Cet essai est réalisé en conditions de saleté et en conditions additionnelles.

Méthode : Une méthode de dilution/neutralisation est appliquée à une formulation selon l'invention. Le neutralisant est constitué de chlorure de sodium (0,85% P/V), de Na₂CO₃ (0,1%), complété par de l'eau distillée.

La formulation selon l'invention est diluée dans de l'eau physiologique aux concentrations suivantes : 0,25%, 0,5% et 1%.

Les tests sont réalisés sur une souche de *Candida albicans* (ATCC 90028) à une température de 20° C (± 1°C). Le temps de contact est limité à 5 minutes (± 10 secondes).

La substance interférente est de l'albumine bovine (fraction V) à raison de 3,00 g/l. Ceci constitue la condition de saleté.

Incubation à une température de 25,0°C (± 0,2°C).

Résultats : conformément aux dispositions de la norme NF EN 1275 (Avril 2006) la formule concentrée selon l'invention présente une activité levuricide en conditions de saleté (3,00 g/l d'albumine bovine) après 5 minutes de contact à 20°C vis-à-vis d'une souche de référence de *Candida albicans* pour la concentration de 1%.

### 2. Virus

Ce test d'efficacité virucide est réalisé selon la méthodologie de la norme NF EN 14476+A1 (Janvier 2007) sur un virus influenza H3N2 sur 3 échantillons de produit désinfectant prêts à l'emploi, selon la formulation de la présente invention.

Les souches H3N2 et les souches H1N1 appartiennent à la famille des virus influenza de type A et présentent une grande homologie de structure. Par conséquente les résultats obtenus sur les virus H3N2 peuvent être étendus aux virus H1N1. Méthode : Le test est réalisé à 20°C (± 1°C). Le virus est titré en UFP/ml soit en nombre de particules virales infectieuses par ml et plus communément en logarithme du titre viral. Le temps de contact est de 30 secondes. Les échantillons sont dilués dans de l'eau distillée stérile.

La souche virale Influenza est H3N2 A/Brisbane/10/2007 (Institut Pasteur) cultive sur des cellules MDCK à 36,5°C sous 5% de CO₂.

La substance interférente est de l'albumine bovine (BSA 3,00 g/l).

La technique d'arrêt de l'action virucide est l'adjonction d'une solution contenant Na₂CO₃, à raison de 70 g/l, pH 10,85 et 10ml de solution d'arrêt pour 10 ml de solution d'essai. Résultats : les 3 échantillons ont une activité virucide sur la souche de H3N et par extension sur une souche de type H1N1. Plus particulièrement :
- l'échantillon 1 a une activité virucide sur le virus influenza H1N1 (modèle H3N2) à la concentration de 40% pour 30 secondes de contact ;
- l'échantillon 2 a une activité virucide sur le virus influenza H1N1 (modèle H3N2) à la concentration de 10% pour 1 minute de contact ;
- l'échantillon 3 a une activité virucide sur le virus influenza H1N1 (modèle H3N2) aux concentrations de 1% et 2% pour 5 minutes de contact ;

Par ailleurs, compte tenu des résultats expérimentaux obtenus sur le virus influenza A/H3N2 et d'une similarité de structure et de sensibilité aux produits chimiques des virus enveloppés à génome ARN négatif, les produits présentant une activité virucide démontrée dans cette étude sur le virus influenza A/H3N2 peuvent potentiellement inactiver les virus enveloppés suivants :
- Famille des Orthomyxoviridae : virus influenza A, B et C
- Famille des Paramyxoviridae : virus parainfluenza (1-4), virus respiratoire syncytial (VRS)

Par ailleurs les produits testés dans cette étude pourraient se révéler efficace sur d'autres virus enveloppés à génome ADN, tels que la famille des *Herpesviridae* qui comprend:
HHV-1 ou HSV-1 (Herpes Simplex Virus-1) responsable de l'herpès bucco-labial,
HHV-2 ou HSV-2 (Herpes Simplex Virus-2) responsable de l'herpès génital,
HHV-3 ou VZV (Varicella Zoster Virus) responsable de la varicelle (primo-infection) et/ou du zona (réinfection),
HHV-4 ou EBV (Epstein-Barr Virus) responsable de la mononucléose infectieuse, du lymphome de Burkitt ou du carcinome naso-pharyngé,
HHV-5 ou CMV (Cytomégalovirus) responsable de syndrome mononucléosique, de rétinite, d'infections graves chez l'immunodéprimé ou les transplantés, etc ,
HHV-6, responsable de la roséole infantile, maladie éruptive de l'enfant,
HHV-7, très proche du HHV-6 et qui provoque les mêmes symptômes,
HHV-8 ou KSHV (Kaposi's Sarcoma-associated HerpesVirus), herpès virus associé au sarcome de Kaposi observé notamment chez les personnes séropositives pour le VIH.

### 3.Bactéries

Cet essai quantitatif de suspension pour l'évaluation de l'activité bactéricide des formulations selon la présente invention est réalisée par un Laboratoire de Microbiologie. Méthode : Une méthode de dilution/neutralisation est appliquée à une formulation selon l'invention. Le neutralisant est constitué de chlorure de sodium (0,85% P/V), de Na₂CO₃ (0,1%), complété par de l'eau distillée.

La formulation selon l'invention est diluée dans de l'eau physiologique aux concentrations suivantes : 0,25%, 0,5%, 0,75% et 1%.

Les tests sont réalisés sur des souches de *Staphylococcus aureus* (ATCC 6538), *Escherichia coli* (ATCC 10536), *Enterococcus hirae* (ATCC 10541) et *Pseudomonas aeruginosa* (ATCC 15442) à une température de 20° C (± 1°C). Le temps de contact est limité à 5 minutes (± 10 secondes).

La substance interférente est de l'albumine bovine (fraction V) à raison de 3,00 g/l. Ceci constitue la condition de saleté.

Incubation à une température de 37,0°C (± 0,2°C).

Résultats : Selon les indications de la norme NF EN 1276 (octobre 1997), une formule concentrée de désinfection selon la formulation de la présente invention, présente une activité bactéricide en conditions de saleté (3,00 g/l d'albumine bovine) après 5 minutes de contact à 20°C vis-à-vis des 4 souches de référence testées pour la concentration test de 1%. Le microorganisme limitant est *Staphylococcus aureus* (ATCC 6538).

### 2. Biodégradabilité

Cet essai est une évaluation en milieu aqueux de la biodégradabilité aérobie ultime d'un échantillon de la formulation concentrée selon l'invention. Cet essai est réalisé selon les dispositions de la méthode OCDE 301 B à la concentration de 100,0 g/l correspondant à une teneur en carbone organique de 10 mg/l. La quantité théorique de dioxyde de carbone formée (CO₂Th) dans l'essai << Détergent Désinfectant concentré pour sols, surfaces et matériels à 10 mg/l de COD >> est égale à 33,0 mg/L.

L'analyse physico-chimique est réalisée suivant la norme ASTM D5291.

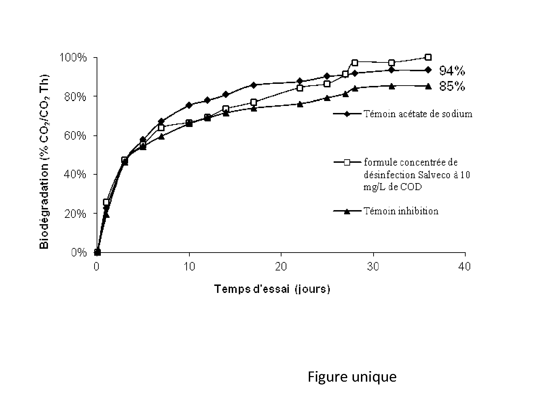

La Fig. 1 représente les courbes de résultats de dégradation par rapport aux CO₂Th.

Résultats : l'essai est considéré comme valide car
- Le pourcentage de dégradation de la substance de référence (acétate de sodium) est supérieur à 60 % (81 %) au quatorzième jour.
- La quantité de CO₂ dégagé par le témoin à blanc est acceptable : de l'ordre de 34 mg/l après 28 jours (valeur à ne pas dépasser : 40 mg/l).
- L'échantillon de la formulation selon l'invention, à 10 mg/l de COD n'est pas inhibiteur de la dégradation de l'acétate de sodium, le mélange « Détergent Désinfectant concentré pour sols, surfaces et matériels à 10 mg/L de COD + Acétate de sodium 100 mg/L » étant dégradé à 72% après 14 jours (condition de validité de la norme : dégradation supérieure à 35% après 14 jours).

### Conclusion :

L'évaluation en milieux aqueux de la biodégradabilité "ultime" de l'échantillon testé suivant la ligne directrice OCDE 301 B donne les résultats suivant :
- Le degré de biodégradation maximal de l'échantillon à 10 mg/l de COD est égal à 100% après 36 jours d'incubation ;
- Le temps de biodégradation (correspondant à 90 % du taux de biodégradation maximal) est d'environ 25 jours ;
- D'après la ligne directrice OCDE 301 B, l'échantillon testé est considéré comme facilement biodégradable (seuil de 60 % de dégagement du CO₂ théorique dépassé après 7 jours d'incubation) .

Le degré de biodégradabilité mesuré prend en compte la totalité de la formulation : effectivement il n'y a pas de sous-produit de dégradation car la formulation est exclusivement composée d'atomes de carbone, d'oxygène et d'hydrogène provenant d'extraits végétaux. C'est une mesure vraie de biodégradabilité ultime.

## Revendications

1. Formulation biocide concentrée d'origine végétale **caractérisée en ce qu'**elle comporte des composés d'origine végétale et renouvelable, lesdits composés étant intégralement biodégradables, ladite formulation contenant :
- entre 0,01% et 20% d'agent chélatant sélectionné parmi l'acide citrique issu du jus de citron, l'acide sorbique issu du sorbier, l'acide oxalique issu des racines ou des rhizomes de plantes, les extraits de chicorée ;
- entre 0,03% et 25% de tensioactifs non-ioniques de type glycosides, esters de polyglycérols ou esters de sorbitan ;
- entre 0,03% et 25% de tensioactifs anioniques sélectionnés parmi les sels carboxyliques d'alkyl polyéthoxylés/propoxylés et/ou de polyols de type polyglycosides et/ou polyglycérols, de métaux alcalins ou alcalino-terreux et sont associés à des structures chimiques acides pour former des tensioactifs du type alkyl carboxylate et/ou alkyl sulfates, lesdits tensioactifs anioniques ayant une chaîne carbonée comprenant entre 6 et 20 atomes de carbone;
- entre 0,1% et 75% d'au moins un acide organique sélectionné parmi l'acide citrique, l'acide lactique et l'acide succinique ;
- entre 0,001% et 8% de parfum naturel sélectionné parmi les huiles essentielles, les essences végétales et les extraits végétaux, comme la menthe A, la menthe N ou l'eucalyptus G.

2. Formulation biocide concentrée d'origine végétale selon la revendication 1, **caractérisée en ce que** l'acide organique est l'acide lactique d'origine agricole renouvelable.

3. Formulation biocide concentrée d'origine végétale selon l'une quelconque des revendications 1 ou 2, **caractérisée en ce que** les tensioactifs non-ioniques sont sélectionnés parmi les alkyl polyglycosides, les esters de polyglycerols et les esters de sorbitan d'origine agricole renouvelable.

4. Formulation biocide concentrée d'origine végétale selon la revendication 1 **caractérisée en ce qu'**elle est concentrée, à diluer et/ou prête à l'emploi.

5. Formulation biocide concentrée d'origine végétale selon la revendication 1, **caractérisée en ce qu'**elle contient :
- 0,4% d'huiles essentielles ;
- 12% de tensioactifs non-ioniques de type glycosides, esters de polyglycérols ou esters de sorbitan ;
- 8% de tensioactifs anioniques de type sels d'acides gras avec une chaîne contenant entre 12 et 18 atomes de carbone ;
- 20% à 40% d'acide citrique;
- 0% à 10% d'acide lactique ;
et qu'elle est intégralement biodégradable et intégralement issue de ressources végétales agricoles renouvelables.

6. Formulation biocide prête à l'emploi obtenue par dilution à l'eau de la formulation biocide selon la revendication 1, **caractérisée en ce qu'**elle comporte des composés d'origine végétale et renouvelable, lesdits composés étant intégralement biodégradables, ladite formulation contenant :
- entre 0,01% et 0,2% d'agent chélatant sélectionné parmi l'acide citrique issu du jus de citron, l'acide sorbique issu du sorbier, l'acide oxalique issu des racines ou des rhizomes de plantes, les extraits de chicorée;
- entre 0,03% et 0,1% de tensioactifs non-ioniques de type glycosides, esters de polyglycérols ou esters de sorbitan ;
- entre 0,03% et 0,1% de tensioactifs anioniques sélectionnés parmi les sels carboxyliques d'alkyl polyéthoxylés/propoxylés et/ou de polyols de type polyglycosides et/ou polyglycérols, de métaux alcalins ou alcalino-terreux et sont associés à des structures chimiques acides pour former des tensioactifs du type alkyl carboxylate et/ou alkyl sulfates, lesdits tensioactifs anioniques ayant une chaîne carbonée comprenant entre 6 et 20 atomes de carbone ;
- entre 0,1% et 0,5% d'au moins un acide organique sélectionné parmi l'acide citrique, l'acide lactique et l'acide succinique.

## Patentansprüche

1. Konzentrierte biozide Formulierung pflanzlichen Ursprungs, **dadurch gekennzeichnet, dass** sie Verbindungen pflanzlichen und erneuerbaren Ursprungs umfasst, wobei die besagten Verbindungen vollständig biologisch abbaubar sind, wobei die besagte Formulierung Folgendes enthält:
- zwischen 0,01% und 20% Chelatbildner ausgewählt aus Zitronensäure aus Zitronensaft, Sorbinsäure aus dem Vogelbeerbaum, Oxalsäure aus den Wurzeln oder Rhizomen von Pflanzen, Zichorien-Extrakten;
- zwischen 0,03% und 25% nichtionische Tenside der Art Glycoside, Polyglycerinester oder Sorbitanester;
- zwischen 0,03% und 25% anionische Tenside gewählt aus den Carboxylatsalzen von polyethoxyliertem/propoxyliertem Alkyl und/oder Polyolen der Art Polyglycoside und/oder Polyglycerine, Alkali- oder Erdalkalimetallen, und die mit säuren chemischen Strukturen verbunden sind, um Tenside der Art Alkylcarboxylat und/oder Alkylsulfate zu bilden, wobei die besagten anionischen Tenside eine Kohlenstoffkette aufweisen, die zwischen 6 und 20 Kohlenstoffatome umfasst;
- zwischen 0,1% und 75% von mindestens einer organischen Säure gewählt aus Citronensäure, Milchsäure und Bernsteinsäure;
- zwischen 0,001% und 8% natürliche Duft gewählt aus den ätherischen Ölen, pflanzlichen Essenzen und den Pflanzenextrakten, wie A-Minze, N-Minze oder G-Eukalyptus.

2. Konzentrierte biozide Formulierung pflanzlichen Ursprungs nach Anspruch 1, **dadurch gekennzeichnet, dass** die organische Säure Milchsäure erneuerbaren landwirtschaftlichen Ursprungs ist.

3. Konzentrierte biozide Formulierung pflanzlichen Ursprungs nach irgendeinem der Ansprüche 1 oder 2, **dadurch gekennzeichnet, dass** die nichtionischen Tenside ausgewählt sind aus Alkylpolyglykosiden, Polyglycerinestern und Sorbitanestern erneuerbaren landwirtschaftlichen Ursprungs.

4. Konzentrierte biozide Formulierung pflanzlichen Ursprungs nach Anspruch 1, **dadurch gekennzeichnet, dass** sie konzentriert, zu verdünnen und/oder einsatzbereit ist.

5. Konzentrierte biozide Formulierung pflanzlichen Ursprungs nach Anspruch 1, **dadurch gekennzeichnet, dass** sie Folgendes enthält:
- 0,4% ätherische Öle;
- 12% nichtionische Tenside der Art Glycoside, Polyglycerinester oder Sorbitanester;
- 8% anionische Tenside der Art Fettsäurensalze mit einer Kette, die zwischen 12 und 18 Kohlenstoffatome enthält;
- 20% bis 40% Zitronensäure;
- 0% bis 10% Milchsäure;
und vollständig biologisch abbaubar und vollständig aus erneuerbaren landwirtschaftlichen Pflanzenressourcen ist.

6. Einsatzbereite biozide Formulierung erhalten durch Verdünnen mit Wasser der bioziden Formulierung nach Anspruch 1, **dadurch gekennzeichnet, dass** sie Verbindungen pflanzlichen und erneuerbaren Ursprungs umfasst, wobei die besagten Verbindungen vollständig biologisch abbaubar sind, wobei die besagte Formulierung Folgendes enthält:
- zwischen 0,01% und 0,2% Chelatbildner ausgewählt aus Zitronensäure aus Zitronensaft, Sorbinsäure aus dem Vogelbeerbaum, Oxalsäure aus den Wurzeln oder Rhizomen von Pflanzen, Zichorien-Extrakten;
- zwischen 0,03% und 0,1% nichtionische Tenside der Art Glykoside, Polyglycerinester oder Sorbitanester;
- zwischen 0,03% und 1% anionische Tenside gewählt aus den Carboxylatsalzen von polyethoxyliertem/propoxyliertem Alkyl und/oder Polyolen der Art Polyglycoside und/oder Polyglycerine, Alkali- oder Erdalkalimetallen, und die mit säuren chemischen Strukturen verbunden sind, um Tenside der Art Alkylcarboxylat und/oder Alkylsulfate zu bilden, wobei die besagten anionischen Tenside eine Kohlenstoffkette aufweisen, die zwischen 6 und 20 Kohlenstoffatome umfasst;
- zwischen 0,1% und 0,5% von mindestens einer organischen Säure gewählt aus Citronensäure, Milchsäure und Bernsteinsäure.

## Claims

1. Concentrated biocidal formulation of vegetable origin, wherein it comprises compounds of plant and renewable origin, said compounds being completely biodegradable, said formulation containing:
- between 0.01% and 20% chelating agent selected from citric acid derived from lemon juice, sorbic acid derived from the rowan tree, oxalic acid derived from plant roots or rhizomes, chicory extracts;
- between 0.03% and 25% non-ionic surfactants such as glycosides, polyglycerol esters or sorbitan esters;
- between 0.03% and 25% anionic surfactants selected from the carboxylate salts of polyethoxylated/propoxylated alkyl and/or polyols such as polyglycosides and/or polyglycerols, alkali or alkaline earth metals and associated with acidic chemical structures to form surfactants such as alkyl carboxylate and/or alkyl sulfates, said anionic surfactants having a carbon chain comprising between 6 and 20 carbon atoms;
- between 0.1% and 75% of at least one organic acid selected from citric acid, lactic acid and succinic acid;
- 0.001% and 8% natural perfume selected from essential oils, vegetable essences and plant extracts, such as A-mint, N-mint or G-eucalyptus.

2. Concentrated biocidal formulation of plant origin according to claim 1, wherein the organic acid is lactic acid of renewable agricultural origin.

3. Concentrated biocidal formulation of plant origin according to any one of claims 1 or 2, wherein the non-ionic surfactants are selected from alkyl polyglycosides, polyglycerol esters and sorbitan esters of renewable agricultural origin.

4. Concentrated biocidal formulation of plant origin according to claim 1, wherein it is concentrated, to be diluted and/or ready for use.

5. Concentrated biocidal formulation of plant origin according to claim 1, wherein it contains:
- 0.4% essential oils;
- 12% non-ionic surfactants such as glycosides, polyglycerol esters or sorbitan esters;
- 8% anionic surfactants such as fatty acid salts with a chain containing between 12 and 18 carbon atoms;
- 20% to 40% citric acid;
- 0% to 10% lactic acid;
and it is completely biodegradable and completely derived from renewable agricultural plant resources.

6. Biocidal formulation ready for use obtained through dilution with water of the biocidal formulation according to claim 1, wherein it includes compounds of plant and renewable origin, said compounds being completely biodegradable, said formulation containing:
- between 0.01% and 0.2% chelating agent selected from citric acid derived from lemon juice, sorbic acid derived from rowan tree, oxalic acid derived from plant roots or rhizomes, chicory extracts;
- between 0.03% and 0.1% non-ionic surfactants such as glycosides, polyglycerol esters or sorbitan esters;
- between 0.03% and 0.1% anionic surfactants selected from carboxylate salts of polyethoxylated/propoxylated alkyl and/or polyols such as polyglycosides and/or polyglycerols, alkali or alkaline earth metals and associated with acidic chemical structures to form surfactants such as alkyl carboxylate and/or alkyl sulfates, said anionic surfactants having a carbon chain comprising between 6 and 20 carbon atoms;
- between 0.1% and 0.5% of at least one organic acid selected from citric acid, lactic acid and succinic acid.
